# EUROPÄISCHE PATENTSCHRIFT

(11) **EP 0 557 283 B1**
(45) Veröffentlichungstag und Bekanntmachung des Hinweises auf die Patenterteilung: **28.02.1996**
(21) Anmeldenummer: 91913301.7
(22) Anmeldetag: 26.06.1991
(51) Int. Cl.: F16D 65/56

(54) **SELBSTTÄTIGE NACHSTELLVORRICHTUNG FÜR EINE SCHEIBENBREMSE**
AUTOMATIC ADJUSTER FOR A DISC BRAKE
DISPOSITIF DE RATTRAPAGE DE JEU AUTOMATIQUE POUR FREIN A DISQUE

(30) Priorität: 26.06.1991 DE 4121026
(43) Veröffentlichungstag der Anmeldung: 01.09.1993
(73) Patentinhaber: ITT Automotive Europe GmbH, D-60488 Frankfurt (DE)
(72) Erfinder: THIEL, Rudolf, D-6000 Frankfurt/M 90 (DE)
(86) Internationale Anmeldenummer: EP9101189
(87) Internationale Veröffentlichungsnummer: WO9300526

(56) Entgegenhaltungen:
- EP-A- 0 154 398
- EP-A- 0 196 765
- EP-A- 0 260 934
- DE-A- 3 802 014
- DE-A- 3 943 106
- DE-B- 2 445 645
- DE-C- 3 136 958

## Beschreibung

Die Erfindung betrifft eine selbsttätige Nachstellvorrichtung für eine Scheibenbremse gemäß dem Oberbegriff des Anspruchs 1.

Eine derartige Nachstellvorrichtung ist aus der DE-A-3 802 014 bekannt. Bei der bekannten Nachstellvorrichtung sind zwischen der Außenfläche einer Nachstellmutter und einer zylindrischen Innenfläche des Bremskolbens zwei Lippendichtungen angeordnet, die bei hohem hydraulischen Druck die genannten Bauteile reibschlüssig miteinander verbinden und eine Drehung der Nachstellmutter verhindern. Eine andere Nachstellvorrichtung ist aus der EP-A-0 154 398 bekannt. Bei dieser Nachstellvorrichtung ist der Boden des Bremskolbens mit einer zylindrischen Hülse versehen, die gegenüber dem Bremskolben drehbar ist und zum Zurückdrehen der Nachstellmutter in ihre Grundstellung dient. Dasselbe gilt für die in der EP-A-0 260 934 offenbarten Nachstellvorrichtung.

Der Erfindung liegt die Aufgabe zugrunde, die Funktion der bekannten Nachstellvorrichtung zu verbessern. Ziel der Erfindung ist es weiterhin, die vorbekannte Nachstellvorrichtung zu vereinfachen und kostengünstiger zu gestalten.

Die Aufgabe wird durch die im Anspruch 1 aufgeführten Merkmale gelöst. Erfindungsgemäß ragt aus dem Boden des Bremskolbens ein in das Innere des Kolbens gerichteter Zylinder hervor, der von der Nachstellmutter ummantelt ist. Eine Mantelfläche des Zylinders wirkt mit einem ringförmig umlaufenden Dichtelement zusammen. Bei Druckbeaufschlagung verhindert das Dichtelement eine Drehbewegung der Nachstellmutter gegenüber dem Bremskolben, so daß eine Nachstellung während des Druckaufbaues verhindert ist, ermöglicht aber eine geringe Axialbewegung. Die erfindungsgemäße Anordnung ist einfacher und funktioniert zuverlässiger als die des Standes der Technik nach der DE-A-3 802 014.

In einer vorteilhaften Ausführung ist ein zweites Dichtelement vorgesehen, das über ein Distanzstück zum ersten Dichtelement gehalten ist, so daß zwischen den beiden Dichtelementen ein vom hydraulischen Druck freier Raum entsteht, in den sich die Dichtungen ausdehnen können.

Wird zusätzlich noch ein Belüftungskanal vorgesehen, so wird in dem vom hydraulischen Druck freien Raum immer atmosphärischer Druck beibehalten.

In einer einfachen Ausgestaltung der Erfindung weist die Nachstellmutter an ihrer dem Boden des Kolbens zugewandten Stirnseite einen Reibkonus auf. Dieser Reibkonus an der Stirnseite der Mutter ist einfach herstellbar.

Ist auf der äußeren Mantelfläche der Nachstellmutter ein Kugellager axial auflegbar, so dient die äußere Mantelfläche direkt zur Aufnahme des Kugellagers und es sind keine gesonderten Teile erforderlich.

In einer einfachen Ausführungsform der Erfindung ist das Dichtelement mit zwei Schenkeln und einem Grundschenkel U-förmig ausgebildet, so daß bei Druckbeaufschlagung sich die beiden Schenkel des U-förmigen Dichtelementes einerseits gegen die Nachstellmutter und andererseits gegen den Bremskolben anlegen und damit eine Drehbewegung verhindern.

Die Erfindung läßt sich noch verbessern durch eine der in den Ansprüchen 9 bis 15 beschriebenen Maßnahmen. Eine Weiterbildung gemäß Anspruch 9 besteht im Prinzip darin, an den mit der Nachstellmutter drehfest verbundenen Manschetten umlaufende Dichtlippen vorzusehen, die an einer zylindrischen Fläche des Bremskolbens anliegen. Aufgrund der kleinen Anlageflächen der Dichtlippen besteht zwischen Bremskolben und Nachstellmutter nur ein minimaler Reibschluß, solange der hydraulische Druck in der hydraulischen Betätigungsvorrichtung gering ist. Die Nachstellmutter kann sich während des Nachstellvorgangs frei drehen. Bei höherem hydraulischen Druck wird die radiale Innenfläche der Manschette gegen die zylindrische Fläche des Bremskolbens gedrückt. Aufgrund der großen Anlagefläche wird ein so großer Reibschluß zwischen Bremskolben und Nachstellmutter hergestellt, daß die Drehbewegung der Nachstellmutter nicht mehr möglich ist.

Um sicherzustellen, daß zwischen der Manschette und dem zylindrischen Vorsprung des Bremskolbens stets Atmosphärendruck herrscht, ist ein Belüftungskanal gemäß Anspruch 10 zweckmäßig.

Bevorzugte Ausführungsformen einer drehfesten Verbindung zwischen der Manschette und der Nachstellmutter ergeben sich aus den Ansprüchen 11 bis 13. Besonders betriebssicher ist die Anordnung gemäß Anspruch 12. Wenn beispielsweise die Nachstellmutter verklemmt ist und sich trotz zunehmenden Belagverschleißes nicht dreht, kommt es zu einer großen axialen Relativbewegung zwischen der Nachstellmutter und dem Bremskolben. Die drehfeste Verbindung zwischen der Manschette und der Nachstellmutter gemäß Anspruch 12 läßt eine große Relativbewegung zu, ohne daß dabei die Manschette relativ zum Bremskolben axial verschoben und ihre Dichtwirkung beeinträchtigt wird. Die Gefahr eines Ausfalls der hydraulischen Betätigungseinheit infolge Undichtigkeit wird also gebannt.

In einer Weiterbildung gemäß Anspruch 14 und 15 ist in dem Hohlraum ein Einlegeteil vorgesehen. Das Einlegeteil hat den Vorteil, daß durch eine entsprechende Wahl seiner Abmessungen und des Materials die Reibkraft an die Erfordernisse genau angepaßt werden kann.

Ausführungsbeispiele der Erfindung werden nachfolgend anhand der Zeichnungen näher erläutert.

Es zeigen
- Fig. 1: einen Längsschnitt durch eine Nachstellvorrichtung einer Scheibenbremse, deren Kolben einen nach innen ragenden Zylinder aufweist,
- Fig. 2: einen Längsschnitt durch die Nachstellvorrichtung einer Scheibenbremse, dessen Zylinder die Nachstellspindel umgreift,
- Fig. 3: einen Längsschnitt durch eine Nachstellvorrichtung einer Scheibenbremse, deren Nachstellmutter einen radial innenliegenden Konus aufweist.
- Fig. 4: eine Nachstellvorrichtung gemäß Fig. 3 mit einem Rückstellbolzen.
- Fig. 5: einen Schnitt durch eine Nachstellvorrichtung mit erfindungsgemäßer Manschette;
- Fig. 6: eine vergrößerte Teilansicht aus Fig. 5;
- Fig. 7: eine vergrößerte Teilansicht einer zweiten Ausführungsform;
- Fig. 8: eine vergrößerte Teilansicht einer dritten Ausführungsform.

In den Figuren sind gleiche bzw. einander entsprechende Bauteile der Übersichtlichkeit wegen mit gleichen Bezugszeichen versehen.

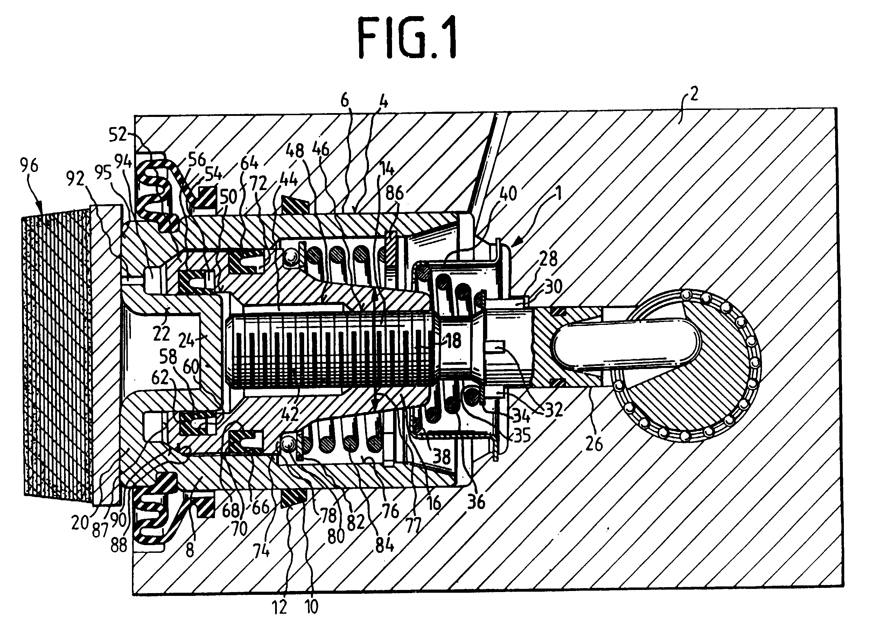

Es wird zunächst auf die Fig. 1 bezug genommen, die einen Längsschnitt durch einen Teil einer Scheibenbremse mit einer Nachstellvorrichtung 1 zeigt. In einem Bremsgehäuse 2 ist eine gestufte Zylinderbohrung 4 vorgesehen. Im Bohrungsabschnitt 6 mit dem größten Durchmesser ist ein Bremskolben 8 axial verschiebbar angeordnet. Der Bremskolben 8 ist topfförmig ausgebildet, wobei sein offenes Ende in der Zylinderbohrung 4 angeordnet ist, während sein geschlossenes Ende aus der Zylinderbohrung 4 herausragt, um gegen eine Bremsbacke 96 zu drücken. Zur Abdichtung des Bremskolbens 8 ist gegenüber der Zylinderbohrung in an sich bekannter Weise eine sogenannte Roll-Back-Dichtung 10 in einer Ringnut 12 des Bremsgehäues 2 angeordnet, die auch die Rückstellung des Bremskolbens 8 bewirkt.

Zwei Nachstellelemente 14,16 der Nachstellvorrichtung 1 sind als Nachstellspindel 14 und Nachstellmutter 16 ausgeführt und über ein selbsthemmungsfreies Gewinde 18 miteinander verbunden. Am Boden 20 des Kolbens 8 ist ein nach innen ragender Zylinder 22 ausgebildet, der mit einem zum ersten Boden 20 hin versetzten zweiten Boden 24 geschlossen ausgeführt ist. Die Spindel 14 ist in einem Bohrungsabschnitt 26 mit verringertem Durchmesser geführt und erstreckt sich bis zu dem Boden 24. Am Rand des Bohrungsabschnittes 26 ist eine Aussparung in Form einer Längsnut 28 ausgebildet, in die ein sich radial erhebender Ansatz 30 der Spindel 14 eingreift, so daß die Spindel 14 drehgesichert ist. Der Ansatz 30 und drei weitere Ansätze 32 sind über den Umfang der Spindel 16 verteilt und enden axial auf gleicher Höhe, so daß in diesem Bereich eine Ringscheibe 34 an die Ansätze 30,32 anlegbar ist. Die Ringscheibe 34 bildet eine Anlagefläche 35 für eine Spindelfeder 36, die sich mit ihrem anderen Ende 38 in einer gehäusefesten Hülse 40 abstützt. Die Spindel 14 ist in ihrem dem Kolbenboden 20 zugewandten Ende über ein selbsthemmungsfreies Gewinde 18 mit der Nachstellmutter 16 verbunden. Die Nachstellmutter 16 weist eine dreifach gestufte Durchgangsbohrung 44 mit einer kleineren Stufe 46, einer größeren Stufe 48 und einer großen Stufe 50 auf. Dabei vergrößert sich der Durchmesser der Stufe in Richtung auf den Boden 20 des Bremskolbens zu. In der kleinsten Stufe 46 ist das Gewinde 18 ausgeführt. Ein Endabschnitt 52 der Nachstellmutter 16 ummantelt mit der Bohrung 50 größten Durchmessers den Zylinder 22 und weist eine ringförmig umlaufende Innennut 54 mit einer U-förmigen Dichtung 56 auf. Die U-förmige Dichtung 56 besteht im wesentlichen aus zwei parallelen Schenkeln 58,60 und einem Grundschenkel 62. Der Schenkel 58 legt sich bei Druckbeaufschlagung gegen den Zylinder 22 und die Schenkel 60,62 gegen den Endabschnitt 52. Eine weitere U-förmige Dichtung 64 mit Schenkeln 66,68 und einem Grundschenkel 70 ist in einer Nut 72 einer äußeren Mantelfläche 74 der Mutter 16 eingesetzt. Der Schenkel 68 und der Grundschenkel 70 legen sich bei Druckbeaufschlagung gegen die äußere Mantelfläche 74 und der Schenkel 66 gegen die innere Zylinderfläche 76 des Bremskolbens 8. Die Nachstellmutter 16 vergrößert ihren äußeren Durchmesser 77 in Richtung auf den Boden 20 des Bremskolbens 8 zu und weist insgesamt eine Glockenform mit einem Absatz 78 auf. An dem Absatz 78 ist ein Kugellager 80 angelegt, das über eine Ringscheibe 82 von einer Feder 84 gehalten ist. Die Feder 84 stützt sich an einem in dem Bremskolben 8 angeordneten Innenring 86 ab. Der Bremskolben 8 drückt mit seiner Stirnseite 88 gegen die Bremsbacke 96. Von der Stirnseite 88 des Bodens 20 führt ein gebohrter Belüftungskanal 92 zu einem Ringraum 94 zwischen den beiden Dichtelementen 56,64. Bei Beaufschlagung der Dichtelemente 56,64 durch ein hydraulisches Medium kann Atmosphäre durch den Belüftungskanal 92 eindringen und bewirkt die Bremswirkung der Dichtelemente 56,64. Die Nachstellmutter 16 ist am Endabschnitt 52 an ihrer Stirnseite 87 mit einem Reibkonus 88 ausgebildet, der gegen einen entsprechenden Reibkonus 90 des Bremskolbens 8 anlegbar ist.

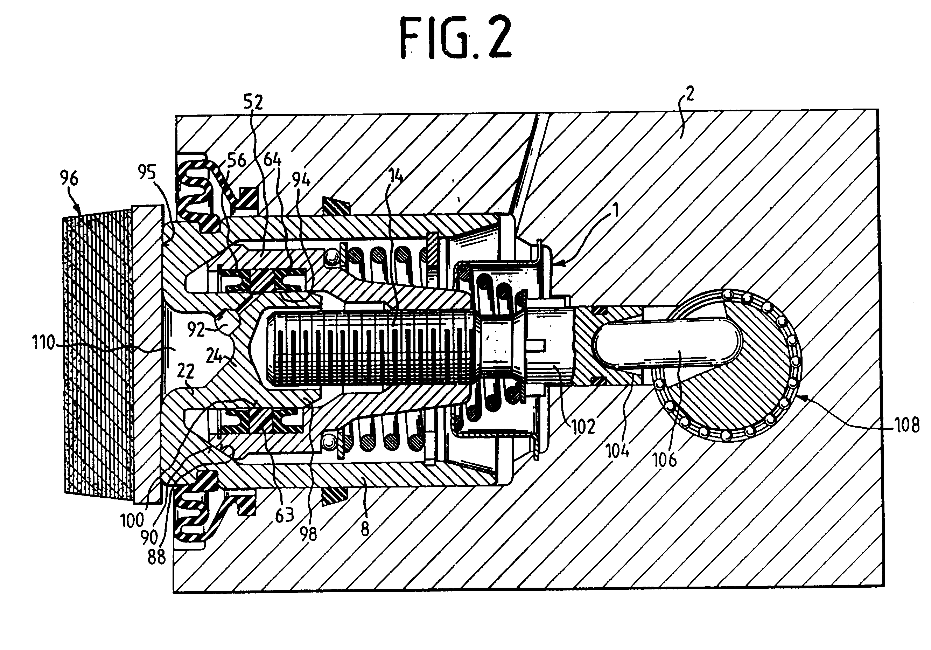

Fig. 2 zeigt die Nachstellvorrichtung 1 in dem Bremsgehäuse 2 der Teilbelagscheibenbremse mit einem Bremskolben 8. Der Zylinder 22 weist eine über dem Boden 24 verlängerte Hülse 98 auf. Die Hülse 98 ummantelt teilweise das untere Ende 42 der Spindel 14. Dabei können beide Dichtelemente 56,64 an der äußeren Zylinderfläche 100 des Zylinders 22 anlegbar sein. Damit ist sichergestellt, daß der Endabschnitt 52 der glockenförmigen Nachstellmutter 16 in axialer Länge auf gleichem Radius massiv ausgeführt ist, so daß die Kraftübertragung zu den Reibkonussen 88,90 gewährleistet ist. Zwischen den beiden Dichtelementen 56,64 ist ein Distanzstück 63 angeordnet. Die Nachstellspindel 14 weist an ihrem der Bremsbacke 96 abgewandten Endteil 102 eine parabolförmige Ausnehmung 104 auf, in die ein Druckstück 106 einer Exzentervorrichtung 108 eingreift. Die Exzentervorrichtung 108 dient zur Übertragung der mechanischen Bremsbetätigung. An der Stirnseite 94 des Bremskolbens 8 ist eine zylinderförmige Ausnehmung 110 vorgesehen, von der aus der gebohrte Belüftungskanal 92 zu dem Ringraum 94 zwischen beiden Dichtelementen 56,64 führt.

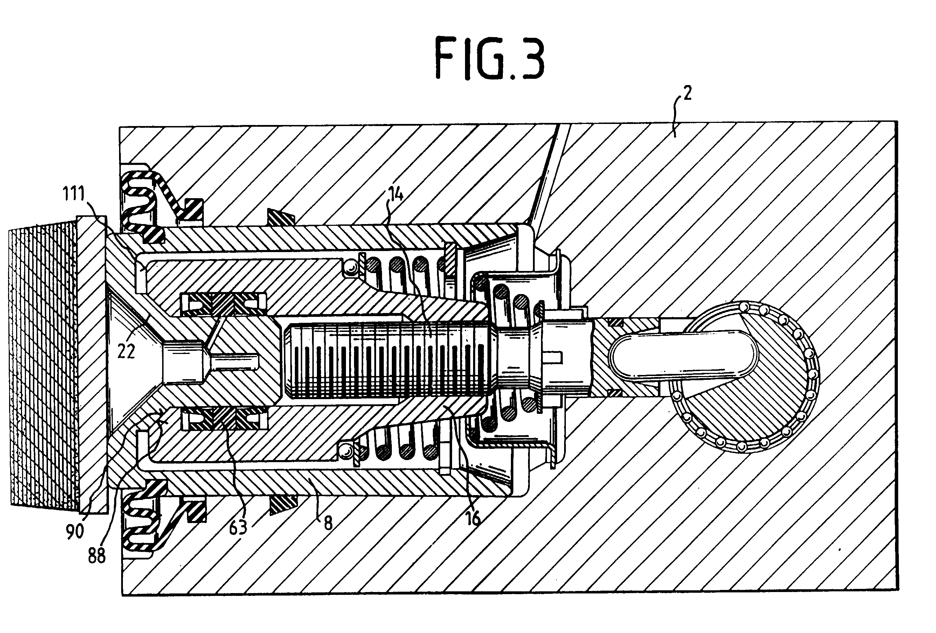

Fig. 3 zeigt eine Nachstellmutter 16, bei der der Reibkonus 88 von der Stirnseite der Nachstellmutter 110 zu der Bohrung, also nach innen gerichtet ist. Damit ist der Konus 90 an dem nach innen ragenden Zylinder 22 des Bremskolbens 8 ausgebildet.

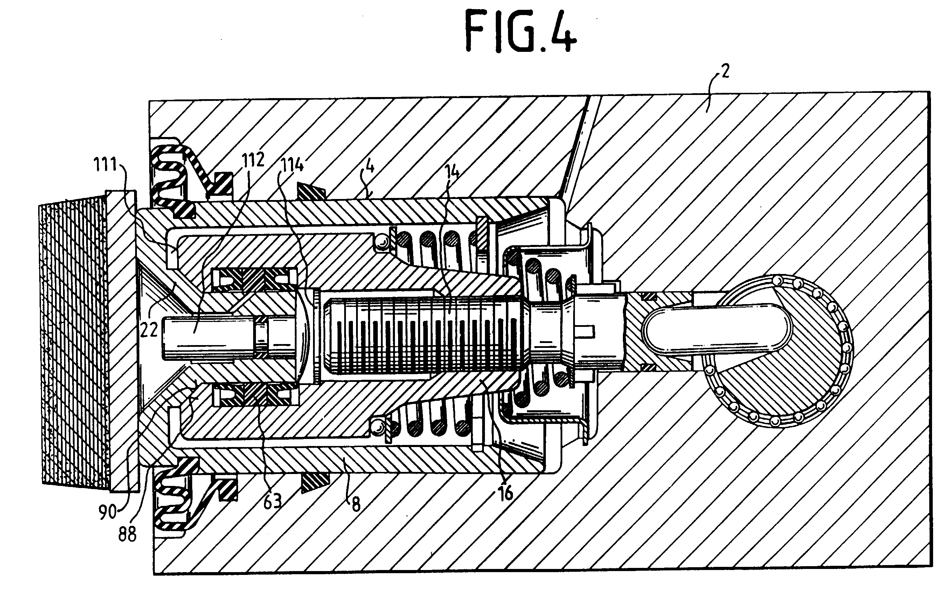

Fig. 4 zeigt in dem Zylinder 22 einen Bolzen 112, der zur Rückstellung der Nachstellvorrichtung dient. Nach Bremsbelagverschleiß ist der Kolben 8 und mit ihm die Nachstellmutter 16 aus dem Gehäuse 2 herausgefahren. Drückt man den Kolben 112 gegen eine in die Nachstellmutter 16 eingelegte Druckplatte 114, so werden die Reibkonusse 88,90 voneinaner getrennt und die Mutter 16 kann problemlos auf der Spindel 14 in Richtung auf das Innere der Zylinderbohrung 4 zu zurückgedreht werden.

Als Hauptmerkmale ergeben sich funktionssichere Nachstellung in drucklosem Zustand, kein Festgehen durch Satteldehnung, kostengünstige Herstellung, Bedienungsfehler ohne Einfluß auf die Nachstellung. Des weiteren wird ein Fließpreßkolben verwandt mit innenliegendem Bremszylinder 22 und Bremskonus für die Übertragung der Handbremskraft. Es ergibt sich eine Fließpreßhülse 16 mit Mehrganggewinde und zwei in der Hülse angeordneten Brems- und Dichtelementen und nach innen gerichtetem Bremskonus und mit offenem Innendurchmesser für kostengünstige Serienfertigung. Bei Belagwechsel muß der Kolben gedreht werden, um in seine Ausgangslage zurückzukehren. In Fig. 4 wird durch Druck auf den Bolzen 6 die Rückstellkraft auf die Scheibe übertragen, die dann die Bremswirkung des Konus aufhebt und somit die Hülse frei drehen läßt, bis der Kolben seine Ausgangslage erreicht hat.

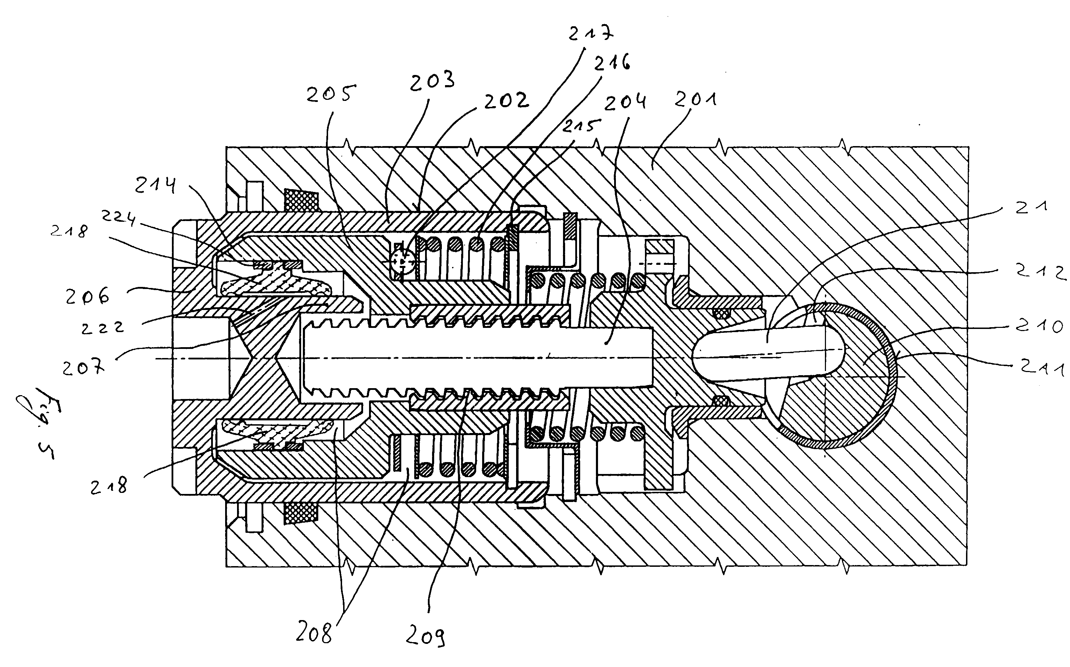

Die in Fig. 5 dargestellte Nachstellvorrichtung weist ein Gehäuse 201 mit einer gestuften Bremszylinderbohrung 202 auf, in der ein hohler Bremskolben 203 und ein aus einer Spindel 204 und einer Nachstellmutter 205 zusammengesetztes Nachstellelement axial verschiebbar angeordnet sind. Vom Boden 206 des Bremskolbens 203 ausgehend ragt ein zylindrischer Vorsprung 207 in den Innenraum 208. Die Nachstellmutter 205 erstreckt sich im Inneren des Bremskolbens 203 über den Vorsprung 207 und ist über ein selbsthemmungsfreies Gewinde 209 mit der Spindel 204 verbunden.

Zur Betätigung der mechanischen Betätigungsvorrichtung dient eine Welle 210, die in einer weiteren Bohrung 211 des Gehäuses 201 drehbar gelagert ist und eine exzentrische Ausnehmung 212 aufweist. Von der exzentrischen Ausnehmung 212 wird das eine Ende eines Druckstiftes 213 aufgenommen, dessen anderes Ende auf die Spindel 204 einwirkt. Eine Drehung der Welle 210 wird über den Druckstift 213 in eine Axialbewegung der Spindel 204 überführt. Die Spindel 204 überträgt die Bewegung über das Gewinde 209 auf die Nachstellmutter 205, bis deren Reibkonus 214 am Bremskolben 203 anliegt und auch dieser verschoben wird. Der Bremskolben 203 drückt dann eine nicht gezeigte Bremsbacke an eine nicht gezeigte Bremsscheibe an. Anschließend wird über die genannten Bauelemente von der Welle 210 bis zur Bremsbacke eine Zuspannkraft übertragen. Dabei kann sich die Nachstellmutter 205 aufgrund der geschlossenen Reibkupplung 214 nicht drehen.

Zur Betätigung der hydraulischen Betätigungsvorrichtung wird der Innenraum 208 mit hydraulischem Druck beaufschlagt, bis sich der Bremskolben 203 axial verschiebt und auf die Bremsbacke drückt. Bei zunehmendem Verschleiß der Bremsbeläge verlängert sich der vom Kolben zurückzulegende Betätigungsweg und die selbsttätige Nachstellvorrichtung tritt in Aktion, wenn sich die mechanische Betätigungsvorrichtung in ihrer Ruhestellung befindet. Der Bremskolben 203 wirkt über eine Scheibe 215, eine Schraubenfeder 216 und ein Kugellager 217 auf die Nachstellmutter 205 ein. Da jetzt die Reibkupplung 214 geöffnet ist, dreht sich die Nachstellmutter 205 auf der Spindel 204, bis der verlängerte Betätigungsweg ausgeglichen ist.

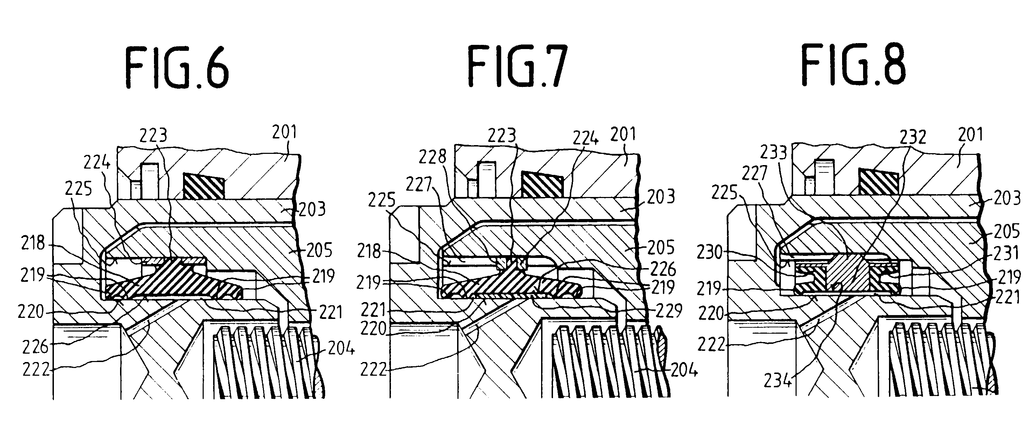

Wie man am besten in Fig. 6 erkennt, ist zwischen der Nachstellmutter 205 und dem zylindrischen Vorsprung 207 des Bremskolbens 203 eine Manschette 218 angeordnet. Die Manschette 218 besitzt vier umlaufende Dichtlippen 219, die an der Umfangsfläche 220 des Vorsprungs 207 anliegen. Der entstehende Hohlraum 221 ist über einen Belüftungskanal 222 mit dem Außenraum verbunden, so daß im Hohlraum 221 stets Atmosphärendruck herrscht. Die Manschette 218 weist mehrere radiale Vorsprünge 223 auf, die in zugehörige Öffnungen eines starren Ringes 224 hineinragen. Der Ring 224 ist in eine Bohrung 225 der Nachstellmutter 205 eingepreßt. Dabei wird eine drehfeste Verbindung hergestellt, so daß eine Drehbewegung bzw. ein Drehmoment von der Nachstellmutter 205 auf die Manschette 218 übertragen wird.

Bei geringem hydraulischem Druck im Innenraum 208 liegen nur die Dichtlippen 219 an der Fläche 220 an, so daß sich die Nachstellmutter 205 leicht drehen kann und eine Nachstellung erfolgt. Bei hohem hydraulischem Druck, d.h. wenn der Druckunterschied zwischen dem Innenraum 208 und dem Hohlraum 221 einen vorbestimmten Wert überschreitet, wird die relativ große Innenfläche 226 gegen die Fläche 220 gepreßt und ein Reibschluß zwischen Bremskolben 203 und Manschette 218 hergestellt. Die Nachstellmutter 205 kann sich jetzt nicht mehr drehen. Wenn nun bei hohem hydraulischem Druck aufgrund einer elastischen Dehnung des Bremssattels ein verlängerter Betätigungsweg auftritt, wird dieser durch die Nachstellvorrichtung nicht ausgeglichen.

In Fig. 7 ist ein weiteres Ausführunsbeispiel dargestellt. Der starre Ring 224 ist hier nicht wie in Fig. 6 eingepreßt, sondern gegenüber der Nachstellmutter 205 axial verschiebbar. Die Nachstellmutter ist mit einer axial verlaufenden Nut 227 versehen, in die ein radialer Vorsprung 228 des Ringes 224 eingreift, um die Manschette 218 mit der Nachstellmutter 205 drehfest zu verbinden. Diese Anordnung ermöglicht eine große axiale Relativbewegung zwischen Nachstellmutter 205 und Bremskolben 203. Ein Ausfall der Bremse infolge einer durch Verrutschen der Manschette 218 auf dem zylindrischen Vorsprung 207 bedingten Undichtigkeit wird wirkungsvoll vermieden. In dem Hohlraum 221 zwischen der radial inneren Fläche 226 der Manschette 218 und der Umfangsfläche 220 des zylindrischen Vorsprungs 207 ist ein hülsenförmiges Einlegeteil 229 aus Kunststoff angeordnet, welches zur Anpassung der Reibverhältnisse an die Erfordernisse dient.

Fig. 8 zeigt ein letztes Ausführungsbeispiel, bei dem zwei elastische Manschetten 230,231 mit U-förmigem Profil verwendet werden. Die Manschetten haben jeweils eine Dichtlippe 219, die an der Fläche 220 anliegt. Ein starrer Ring 232 mit T-förmigem Profil ist mit einem radialen Vorsprung 233 versehen, der in die Nut 227 eingreift. Dadurch kann wiederum der Ring 232 und mit ihm die Manschetten 230,231 gegenüber der Nachstellmutter 205 in axialer Richtung leicht verschoben werden, während ein Verdrehen ausgeschlossen ist. Die radial inneren Flächen 234 der Manschetten 230,231 legen sich an die Fläche 220 an, wenn der Innenraum 208 mit hohem hydraulischem Druck beaufschlagt wird. Durch den Reibschluß wird die Nachstellmutter 205 mit dem Bremszylinder drehfest verbunden, so daß keine Nachstellung erfolgen kann. Bei einer Fehlfunktion kann sich aber die Nachstellmutter 205 in axialer Richtung gegenüber dem Bremskolben 203 bewegen, ohne daß die Manschetten 230,231 und der Ring 232 aus ihrer korrekten Einbaulage verschoben und die Dichtigkeit der hydraulischen Betätigungsvorrichtung beeinträchtigt würde.

## Patentansprüche

1. Selbsttätige Nachstellvorrichtung für eine Scheibenbremse mit einem Bremssattelgehäuse,
- wobei die Scheibenbremse einen Bremskolben (8) aufweist, der zur Betätigung einer Bremsbacke (96) in einem Zylinder verschiebbar angeordnet und der mittels einer hydraulischen Betätigungseinrichtung und einer mechanischen Betätigungseinrichtung betätigbar ist;
- mit einem zwischen dem Bremskolben (8) und der mechanischen Betätigungseinrichtung angeordneten, zwei über ein selbsthemmungsfreies Gewinde (18) miteinander verbundene Nachstellelemente (14, 16) aufweisenden, verlängerbaren Nachstellglied, wobei die Nachstellelemente (14,16) als Nachstellmutter (16) und als Nachstellspindel ausgeführt sind; und
- mit einer Reibkupplung (88,90) zum Festhalten eines der Nachstellelemente bei mechanischer Betätigung,
dadurch **gekennzeichnet**, daß aus dem Boden (20) des Bremskolbens (8) ein in das Innere des Kolbens (8) gerichteter Zylinder (22) hineinragt, der von der Nachstellmutter (16) ummantelt ist und daß eine äußere Zylinderfläche (100) des Zylinders (22) mit einem ringförmig umlaufenden Dichtelement (56) zusammenwirkt.

2. Nachstellvorrichtung nach Anspruch 1, dadurch **gekennzeichnet**, daß ein zweites ringförmig umlaufendes Dichtelement (64) mit einer Mantelfläche (76) des Kolbens (8) zusammenwirkt.

3. Nachstellvorrichtung nach Anspruch 1 oder 2, dadurch **gekennzeichnet**, daß in einem Ringraum (94) zwischen beiden Dichtelementen (56,64) ein Belüftungskanal (92) mündet.

4. Nachstellvorrichtung nach Anspruch 1, dadurch **gekennzeichnet**, daß der Zylinder (22) um eine Hülse (98) verlängert ist.

5. Nachstellvorrichtung nach Anspruch 4, dadurch **gekennzeichnet**, daß beide Dichtelemente (56,64) in einer zur Stirnseite hin offenen Nut der Mutter (16) angeordnet sind.

6. Nachstellvorrichtung nach einem der vorhergehenden Ansprüche, dadurch **gekennzeichnet**, daß die Nachstellmutter (16) an ihrer dem Boden (20) des Kolbens (8) zugewandten Stirnseite (87) einen Reibkonus (88) aufweist.

7. Nachstellvorrichtung nach einem der vorhergehenden Ansprüche, dadurch **gekennzeichnet**, daß auf der äußeren Mantelfläche (74) der Nachstellmutter (16) ein Kugellager (80) axial auflegbar ist.

8. Nachstellvorrichtung nach einem der vorhergehenden Ansprüche, dadurch **gekennzeichnet**, daß das Dichtelement (56,64) mit zwei Schenkeln (58,60,66,68) und einem Grundschenkel (62,70) U-förmig ausgebildet ist.

9. Nachstellvorrichtung nach Anspruch 1, für eine Scheibenbremse mit einem Bremssattel, der einen Bremszylinder und einen im Bremszylinder verschiebbar angeordneten, hohlen Bremskolben (203) aufweist; mit einer hydraulischen und einer mechanischen Betätigungsvorrichtung; mit einem zwischen dem Bremskolben (203) und der mechanischen Betätigungsvorrichtung angeordneten, verlängerbaren Nachstellglied, das eine Nachstellspindel und eine über ein selbsthemmungsfreies Gewinde mit der Nachstellspindel (204) verbundene Nachstellmutter (205) aufweist; mit einem aus dem Boden des Bremskolbens (203) in dessen Innenraum ragenden, zylindrischen Vorsprung (207), wobei sich die Nachstellmutter (205) über die Umfangsfläche des Vorsprungs erstreckt; und mit mindestens einer auf der Umfangsfläche (226,220) des zylindrischen vorsprungs (207) angeordneten, ringförmig umlaufenden, elastischen Manschette (230,231), dadurch **gekennzeichnet**, daß die Manschette (218) zumindest zwei umlaufende Dichtlippen (219) aufweist oder daß zwei zusammenwirkende Manschetten (230,231) mindestens je eine umlaufende Dichtlippe (219) aufweisen, die im axialen Abstand zueinander an der Umfangsfläche (220) des zylindrischen Vorsprungs (207) anliegen, wobei eine radial innere Fläche (226,234) der Manschette (218,230,231) nicht an der Umfangsfläche (220) anliegt, solange der hydraulische Druck einen bestimmten Wert nicht überschreitet und daß die Manschette(n) (218,230,231) mit der Nachstellmutter (205) drehfest verbunden ist (sind).

10. Nachstellvorrichtung nach Anspruch 9, dadurch **gekennzeichnet**, daß zwischen einer radial inneren Fläche (226,234) der Manschette (218,230, 231) und der Umfangsfläche (220) ein ringförmiger Hohlraum (221) bleibt und daß der Hohlraum (221) über einen Belüftungskanal (222) mit dem Außenraum verbunden ist.

11. Nachstellvorrichtung nach Anspruch 9 oder 10, dadurch **gekennzeichnet**, daß die Nachstellmutter ( 205) eine Stufenbohrung (225) aufweist und daß die elastische Manschette (218) drehfest mit einem starren Ring (224) verbunden ist, der in die Stufenbohrung (225) eingepreßt ist.

12. Nachstellvorrichtung nach Anspruch 9 oder 10, dadurch **gekennzeichnet,** daß die Nachstellmutter (205) eine Bohrung (225) und mindestens eine in der Bohrung (225) axial verlaufende Nut (227) aufweist, und daß die elastische(n) Manschette(n) (218,230,231) drehfest mit einem starren Ring (224,232) verbunden ist (sind), der mindestens einen sich in die Nut (227) erstreckenden, radialen Vorsprung (228,233) aufweist, der eine Axialbewegung zuläßt.

13. Nachstellvorrichtung nach Anspruch 11 oder 12 dadurch **gekennzeichnet**, daß der Ring (224) radiale Öffnungen aufweist, in die sich radiale Vorsprünge (223) der Manschette (218) erstecken.

14. Nachstellvorrichtung nach einem der Ansprüche 9 bis 13, dadurch **gekennzeichnet**, daß in dem Hohlraum (221) zwischen der radial inneren Fläche (226,234) der Manschette (218,230,231) und der Umfangsfläche (220) des zylindrischen Vorsprungs (207) ein Einlegeteil (229) angeordnet ist.

15. Nachstellvorrichtung nach Anspruch 14, dadurch **gekennzeichnet**, daß das Einlegeteil (229) aus einer dem Reibwert angepaßten Kunststoffhülse besteht, die über den Vorsprung (207) geschoben wird.

## Claims

1. An automatic adjusting apparatus for a disc brake with a brake caliper housing,
- the disc brake including a brake piston (8) which is slidingly positioned within a cylinder for the actuation of a brake shoe (96) and which is actuatable by means of a hydraulic actuating device and a mechanical actuating device;
- with an extendable adjusting member which is disposed between the brake piston (8) and the mechanical actuating device and is furnished with two adjusting elements (14, 16) being connected to each other through a thread free of nonreversibility (18), the adjusting elements (14, 16) being formed as an adjusting nut (16) and an adjusting spindle; and
- with a friction clutch (88, 90) to hold back one of the adjusting elements in the event of a mechanical actuation,
**characterized** in that a cylinder (22) directed into the interior of the piston (8) projects from the bottom (20) of the brake piston (8), which cylinder is encased by the adjusting nut (16), and in that an external cylindrical surface (100) of the cylinder (22) interacts with a ring-shaped circumferential sealing element (56).

2. An adjusting apparatus as claimed in claim 1,
**characterized** in that a second ring-shaped circumferential sealing element (64) interacts with a peripheral surface (76) of the piston (8).

3. An adjusting apparatus as claimed in claim 1 or in claim 2,
**characterized** in that an aeration duct (92) ends into an annular chamber (94) between both sealing elements (56, 64).

4. An adjusting apparatus as claimed in claim 1,
**characterized** in that the cylinder (22) is extended by the length of a bushing (98).

5. An adjusting apparatus as claimed in claim 4,
**characterized** in that both sealing elements (56, 64) are positioned in a groove of the adjusting nut (16) which is open toward the front side.

6. An adjusting apparatus as claimed in anyone of the preceding claims,
**characterized** in that the adjusting nut (16) includes a friction cone (88) at its front side (87) facing the bottom (20) of the piston (8).

7. An adjusting apparatus as claimed in anyone of the preceding claims,
**characterized** in that a ball bearing (80) is axially abuttable on the external peripheral surface (74) of the adjusting nut (16).

8. An adjusting apparatus as claimed in anyone of the preceding claims,
**characterized** in that the sealing element (56, 64) along with two legs (58, 60, 66, 68) and a base leg (62, 70) has a U shape.

9. An adjusting apparatus as claimed in claim 1, for use on a disc brake with a brake caliper which includes a brake cylinder and a hollow brake piston (203) being slidingly positioned within the brake cylinder; with a hydraulic and a mechanical actuating device; with an extendable adjusting member which is positioned between the brake piston (203) and the mechanical actuating device and which is comprised of an adjusting spindle and an adjusting nut (205) being coupled to the adjusting spindle (204) through a thread which is free of nonreversibility; with a cylindrical projection (207) which extends from the bottom of the brake piston (203) into its interior space, the adjusting nut (205) extending beyond the peripheral area of the projection; and with at least one ring-shaped circumferential, elastic sleeve (230, 231) which is positioned on the peripheral area (226, 220) of the cylindrical projection (207),
**characterized** in that the sleeve (218) is formed with at least two circumferential sealing lips (219) or in that two sleeves (230, 231) interacting with each other are each formed with at least one circumferential sealing lip (219) which, at an axial distance from each other, axe in abutment against the peripheral area (220) of the cylindrical projection (207), and a radially internal surface (226, 234) of the sleeve (218, 230, 231) is not in abutment against the peripheral area (220) as long as the hydraulic pressure does not exceed a predetermined value, and in that the sleeve(s) (218, 230, 231) is (are) non-rotatably coupled to the adjusting nut (205).

10. An adjusting apparatus as claimed in claim 9,
**characterized** in that between a radially internal surface (226, 234) of the sleeve (218, 230, 231) and the peripheral area (220) a ring-shaped cavity (221) remains, and in that the cavity (221) is connected to the external space through an aeration duct (222).

11. An adjusting apparatus as claimed in claim 9 or in claim 10,
**characterized** in that the adjusting nut (205) is furnished with a stepped bore (225), and in that the elastic sleeve (218) is non-rotatably coupled to a rigid ring (224) which is pressed into the stepped bore (225).

12. An adjusting apparatus as claimed in claim 9 or in claim 10,
**characterized** in that the adjusting nut (205) is furnished with a bore (225) and with at least one groove (227) which extends axially in the bore (225), and in that the elastic sleeve(s) (218, 230, 231) is (are) non-rotatably coupled to a rigid ring (224, 232) which is formed with at least one radial projection (228, 232) extending into the groove (227) and permitting an axial movement.

13. An adjusting apparatus as claimed in claim 11 or in claim 12,
**characterized** in that the ring (224) includes radial openings into which radial projections (223) of sleeve (218) extend.

14. An adjusting apparatus as claimed in anyone of claims 9 to 13,
**characterized** in that an inserted element (229) is positioned within the cavity (221) between the radially internal surface (226, 234) of the sleeve (218, 230, 231) and the peripheral area (220) of the cylindrical projection (207).

15. An adjusting apparatus as claimed in claim 14,
**characterized** in that the inserted element (229) is constituted by a plastic material bushing which is adapted to the friction value and which is pushed over the projection (207).

## Revendications

1. Dispositif de rattrapage de jeu automatique pour frein à disque comportant un boîtier d'étrier de frein,
- le disque de frein comportant un piston de frein (8) qui est disposé de façon à pouvoir coulisser dans un cylindre en vue de l'actionnement d'une garniture de frein (96) et qui est agencé de façon à pouvoir être actionné au moyen d'un dispositif d'actionnement hydraulique et d'un dispositif d'actionnement mécanique,
- le dispositif de rattrapage de jeu comprenant un organe de rattrapage de jeu à possibilité d'allongement qui est disposé entre le piston de frein (8) et le dispositif d'actionnement mécanique et qui comporte deux éléments de rattrapage de jeu (14, 16) rendus solidaire l'un de l'autre par un filetage (18) à autoblocage, les éléments de rattrapage de jeu (14, 16) étant réalisés sous forme d'un écrou de rattrapage de jeu (16) et sous forme d'une broche de rattrapage de jeu, et
- un accouplement à friction (88. 90) permettant d'immobiliser l'un des éléments de rattrapage de jeu lors d'un actionnement mécanique,
caractérisé en ce qu'une partie cylindrique (22) fait saillie sur le fond (20) du piston de frein (8), cette partie cylindrique étant dirigée vers l'intérieur du piston (8) et étant entourée par l'écrou de rattrapage de jeu (16), et en ce qu'une surface cylindrique extérieure (100) de la partie-cylindrique (22) coopère avec un élément d'étanchéité (56) annulaire qui en fait le tour.

2. Dispositif de rattrapage de jeu selon la revendication 1, caractérisé en ce qu'un second élément d'étanchéité (64) annulaire, qui en fait le tour, coopère avec une surface périphérique (76) du piston (8).

3. Dispositif de rattrapage de jeu selon la revendication 1 ou 2, caractérisé en ce qu'un conduit (92) de mise à l'atmosphère débouche dans une cavité (94) située entre deux éléments d'étanchéité (56, 64).

4. Dispositif de rattrapage de jeu selon la revendication 1, caractérisé en ce que la partie cylindrique (22) est prolongée par un collet (98).

5. Dispositif de rattrapage de jeu selon la revendication 4, caractérisé en ce que deux éléments d'étanchéité (56, 64) sont disposés dans une gorge de l'écrou (16) qui est ouverte vers la face frontale.

6. Dispositif de rattrapage de jeu selon l'une des revendications précédentes, caractérisé en ce que l'écrou de rattrapage de jeu (16) présente un cône de friction (88) sur sa face frontale (87) tournée vers le fond (20) du piston (8).

7. Dispositif de rattrapage de jeu selon l'une des revendications précédentes, caractérisé en ce que, sur la surface périphérique extérieure (74) de l'écrou de rattrapage de jeu (16), il est prévu un roulement à billes (80) agencé de façon à pouvoir être appliqué axialement.

8. Dispositif de rattrapage de jeu selon l'une des revendications précédentes, caractérisé en ce que l'élément d'étanchéité (56, 64) est réalisé en forme de U comportant deux branches (58, 60, 66, 68) et une base (62, 70).

9. Dispositif de rattrapage de jeu selon la revendication 1, pour frein à disque comportant un étrier de frein qui comprend un cylindre de frein et un piston de frein (203) creux disposé de façon de manière coulissante dans le cylindre de frein, un dispositif d'actionnement hydraulique et un dispositif d'actionnement mécanique, le dispositif de rattrapage de jeu comprenant un organe de rattrapage de jeu pouvant être allongé, qui est disposé entre le piston de frein (203) et le dispositif d'actionnement mécanique et qui comprend une broche de rattrapage de jeu et un écrou de rattrapage de jeu (205) rendu solidaire de la broche de rattrapage de jeu (204) par un filetage à autoblocage, une partie en saillie cylindrique (207) qui fait saillie à partir du fond du piston de frein (203) dans la cavité de ce dernier, l'écrou de rattrapage de jeu (205) s'étendant au-delà de la surface périphérique de la partie en saillie, et au moins une coupelle élastique annulaire (230, 231) qui est disposée sur la surface périphérique (226, 220) de la partie en saillie cylindrique (207) et qui en fait le tour, caractérisé en ce que la coupelle (218) comporte au moins deux lèvres d'étanchéité (219) qui en font le tout ou en ce que deux coupelles (230, 231) coopérant entre elles comportent chacune au moins une lèvre d'étanchéité (219) qui en fait le tour, les lèvres d'étanchéité étant appliquées, à distance axiale l'une de l'autre, sur la surface périphérique (220) de la partie en saillie cylindrique (207), tandis qu'une surface radialement intérieure (226, 234) de la coupelle (218, 230, 231) n'est pas appliquée sur la surface périphérique (220) tant que la pression hydraulique n'a pas franchi vers le haut une valeur déterminée et en ce que la ou les coupelles (218, 230, 231) est ou sont solidaires en rotation de l'écrou de rattrapage de jeu (205).

10. Dispositif de rattrapage de jeu selon la revendication 9, caractérisé en ce qu'une cavité annulaire (221) subsiste entre une surface radialement intérieure (226, 234) de la manchette (218, 230, 231) et la surface périphérique (220) et en ce que la cavité (221) communique avec l'espace extérieur par l'intermédiaire d'un conduit (222) de mise à l'atmosphère.

11. Dispositif de rattrapage de jeu selon la revendication 9 ou 10, caractérisé en ce que l'écrou de rattrapage de jeu (205) comporte un alésage étagé (225) et en ce que la coupelle élastique (218) est solidaire en rotation d'un anneau rigide (224) qui est emboîté à force dans l'alésage étagé (225).

12. Dispositif de rattrapage de jeu selon la revendication 9 ou 10, caractérisé en ce que l'écrou de rattrapage de jeu (205) comporte un alésage (225) et au moins une rainure (227) s'étendant axialement dans l'alésage (225) et en ce que la ou les coupelles élastiques (218, 230, 231) est ou sont solidaires en rotation d'un anneau rigide (224, 232) qui comporte au moins une partie en saillie radiale (228, 233) qui s'étend dans la rainure (227) et qui autorise un mouvement axial.

13. Dispositif de rattrapage de jeu selon la revendication 11 ou 12, caractérisé en ce que l'anneau (224) comporte des ouvertures radiales dans lesquelles s'étendent des parties en saillie radiale (223) de la coupelle (218).

14. Dispositif de rattrapage de jeu selon l'une des revendications 9 à 13, caractérisé en ce qu'une pièce rapportée (229) est disposée dans la cavité (221) située entre la surface radialement intérieure (226, 234) de la coupelle (218, 230, 231) et la surface périphérique (220) de la partie en saillie cylindrique (207).

15. Dispositif de rattrapage de jeu selon la revendication 14, caractérisé en ce que la pièce rapportée (229) est constituée d'un fourreau en matière plastique qui est adapté au coefficient de frottement et qui est emgagé par-dessus la partie en saillie (207).
